# EUROPÄISCHE PATENTSCHRIFT

(11) **EP 0 465 982 B1**
(45) Veröffentlichungstag und Bekanntmachung des Hinweises auf die Patenterteilung: **19.01.1994**
(21) Anmeldenummer: 91110891.8
(22) Anmeldetag: 01.07.1991
(51) Int. Cl.: C01B 21/08

(54) **Verfahren zur kontinuierlichen Herstellung von Natriumazid**
Process for the continuous production of sodium azide
Procédé de fabrication d'une manière continue d'azoture de sodium

(30) Priorität: 06.07.1990 DE 4021615
(43) Veröffentlichungstag der Anmeldung: 15.01.1992
(73) Patentinhaber: Dynamit Nobel Aktiengesellschaft, 53839 Troisdorf (DE)
(72) Erfinder: Biermanns, Franz-Josef, Dr., W-5210 Troisdorf (DE); Heidbüchel, Hans-Heinz, Dr., W-5000 Köln 41 (DE); Emans, Heinz-Gerd, W-5216 Niederkassel (DE); Weber, Ralf, W-5210 Troisdorf (DE)

(56) Entgegenhaltungen:
- DE-A- 1 144 243
- US-A- 2 994 583
- CHEMICAL ABSTRACTS, vol. 84, no. 18, 3. Mai 1976, Columbus, Ohio, US; abstract no. 124081 F, T. SUWA 'Sodium azide. ' Seite 133 ; & JP-A-50144700
- T. URBANSKI 'Chemistry and technology of explosives.' 1985 , PERGAMON PRESS , OXFORD, GB

## Beschreibung

Gegenstand der vorliegenden Erfindung ist ein kontinuierliches Verfahren zur Herstellung von Natriumazid, bei dem Natriumamid auf einem Trägermaterial aus Natriumazid und Natriumhydroxid mit Distickstoffmonoxid umgesetzt wird.

Die Herstellung von Natriumazid erfolgt bisher in der Weise, daß man Natriumamid mit Distickstoffmonoxid bei Temperaturen oberhalb 190°C zur Reaktion bringt. Bei dieser Temperatur liegt das Natriumamid in geschmolzener Form vor. Es ist deshalb auf einem Trägermaterial aus Natriumazid und Natriumhydroxid aufgebracht. Die Umsetzung wird diskontinuierlich in Mischreaktoren durchgeführt, in denen sich - bedingt durch die Reaktorgröße - maximal 130 kg Natriumamid innerhalb von 8 h umsetzen lassen.

Bei der Reaktion zwischen Natriumamid und Distickstoffmonoxid bildet sich neben dem Zielprodukt Natriumazid noch Wasser, das mit dem Natriumamid unter Bildung von Ammoniak und Natriumhydroxid reagiert. Da Ammoniak und Distickstoffmonoxid ein explosionsfähiges Gemisch bilden, ist es bereits bei der oben geschilderten Verfahrensweise zur Herstellung von Natriumazid zu Explosionen gekommen, wenn die beiden Gase in dem explosionsfähigen Mischbereich lagen. Eine Vergrößerung des Reaktorvolumens zur Erhöhung der Raumzeitausbeute bei diesem bekannten Verfahren würde demzufolge die Gefahr von nicht mehr beherrschbaren Explosionen erheblich erhöhen.

Es bestand deshalb die Aufgabe, die Umsetzung zwischen Natriumamid und Distickstoffmonoxid so zu führen, daß Natriumazid in erheblich größerer Raumzeitausbeute als bei den beschriebenen Verfahren erhalten wird, ohne daß die oben genannten Nachteile auftreten.

In Erfüllung dieser Aufgabe wurde nun ein kontinuierliches Verfahren zur Herstellung von Natriumazid gefunden, bei dem Distickstoffmonoxid mit Natriumamid, das auf einem Trägermaterial aus Natriumazid und Natriumhydroxid angeordnet ist, bei Temperaturen zwischen 200 und 270°C umgesetzt wird, das durch die im kennzeichnenden Teil des Anspruchs 1 angegebenen Maßnahmen charakterisiert ist.

Mit Hilfe dieses Verfahrens ist es möglich, die Raumzeitausbeute bei der Umsetzung von Natriumamid mit Distickstoffmonoxid um ein Mehrfaches gegenüber dem oben geschilderten bekannten Verfahren zu steigern, ohne daß das Gasvolumen aus Ammoniak und Distickstoffmonoxid in einem Maß erhöht wird, das zu unkontrollierbaren Gasexplosionen führt.

In dem Mischreaktor wird auf dem Trägermaterial befindliches geschmolzenes Natriumamid - im Folgenden auch als "festes Reaktionsgut" bezeichnet - in Richtung zum Produktstromteiler gefördert, wobei es sich mit Distickstoffmonoxid (N₂O) zu Natriumazid (NaN₃) und Natriumhydroxyd (NaOH) umsetzt. Entsprechende Misch-Förderorgane sind dem Fachmann bekannt; als Beispiele seien Förderschnecken oder Knetmischer, die vorzugsweise in einem Röhrenreaktor angeordnet sind, genannt.

Der Mischreaktor wird auf einer Innentemperatur zwischen 200 und 270°C gehalten; vorzugsweise erfolgt die Reaktion bei einer Temperatur zwischen 230 und 270°C.

Das feste Reaktionsgut gelangt von dem Mischreaktor in den Produktstromteiler, der sich direkt an den Mischreaktor anschließt und gegebenenfalls auch in diesen an der dem Eingangsteil abgewandten Seite integriert sein kann. Es braucht nach Verlassen des Reaktors nicht mehr auf die Reaktionstemperatur geheizt zu werden; eine besondere Abkühlung ist jedoch auch nicht notwendig, da der Hauptteil des festen Reaktionsgutes von dort aus wieder zum Eingangsteil des Mischreaktors geführt wird, wo er wieder auf die Reaktionstemperatur aufgeheizt werden muß.

Im Produktstromteiler werden zwischen 5 und 10 Gew% des dort anfallenden Reaktonsgemisches ausgeschleust. Aus dem ausgeschleusten Gut wird das darin enthaltende Natriumazid auf an sich bekannte Art gewonnen: Nach Abkühlung wird das Gemisch in Wasser gelöst und anschließend so viel Wasser abdestilliert, bis das Natriumazid ausfällt. Letzeres wird dann abgefiltert und kann gegebenenfalls durch Umkristallisation gereinigt werden.

Die den Produktstromteiler verlassende Hauptmenge des festen Reaktionsgutes wird über geeignete Fördereinrichtungen wieder dem Eingangsteil des Mischreaktors zugeführt. Es ist von Vorteil, diese Fördereinrichtung zu heizen, damit das Gut nicht zu stark abkühlt und möglichst wenig zusätzliche Energie beim Aufheizen des Guts im Mischreaktor eingesetzt zu werden braucht.

Bevor das zurückgeführte Reaktionsgut im Mischreaktor mit Distickstoffmonoxid in Kontakt gebracht wird, wird diesem Produktstrom frisches, vorgeheiztes Natriumamid in der Menge hinzugefügt, die der Menge des Natriumazids entspricht, die im Produkstromteiler ausgeschleust wurde. Zweckmäßigerweise erfolgt dieser Zusatz kurz vor dem Eintritt des zurückgeführten festen Reaktionsgutes in den Mischreaktor. Es ist jedoch auch möglich, die Zugabe im Eingangsteil des Mischreaktors durchzuführen.

Das dem zurückgeführten Reaktionsgut zugefügte Natriumamid ist vorzugsweise auf eine Temperatur erhitzt, bei der es im flüssigem Zustand vorliegt. Prinzipiell ist es auch möglich, die Aufheizung auf eine Temperatur durchzuführen, die der Temperatur entspricht, die das zurückgeführte Reaktionsgut besitzt.

Das Distickstoffmonoxid wird entgegen dem Strom des Festgutes durch den Reaktor geführt. Vorzugsweise wird es am Produktstromteiler in das System eingeführt; es kann aber auch am Ausgangsteil des Mischreaktors eingeführt werden. Es wird ein stöchiometrischer Überschuß eingesetzt; das überschüssige Gas wird zusammen mit dem bei der Reaktion entstehenden Ammoniak im Eingangsteil des Mischreaktors abgezogen.

Es ist von Vorteil, aus dem abgezogenen Gasgemisch das Distickstoffmonoxid vom Ammoniak auf an sich bekannte Weise abzutrennen und dem Prozess im Kreislauf wieder zuzuführen.

Die einzusetzende Menge an Distickstoffmonoxid soll mindestens so groß sein, daß pro zwei Mol Natriumamid ein Mol Distickstoffmonoxid eingesetzt wird. Ein Überschuß über dieses stöchiometrische Verhältnis ist von Vorteil. Der Überschuß kann bis zu 50 % über diesem Verhältnis liegen.

Als Trägermaterial für das Natriumamid dient ein Gemisch aus Natriumazid und Natriumhydroxid, das auch als Rohazid bezeichnet wird. Vorzugsweise liegen diese beiden Substanzen in diesem Gemisch im molaren Verhältnis 1:1 vor. Eine Überschreitung dieses Verhältnisses nach oben oder unten um bis zu 10 % ist durchaus möglich.

Zu Beginn der Umsetzung wird das Rohazid im Mischreaktor vorgelegt und auf Reaktionstemperatur erhitzt. Da beide Substanzen des Rohazides sich während des Prozesses stetig im Molverhältnis 1:1 neu bilden, braucht während des Prozesses keine der beiden Substanzen ergänzt zu werden.

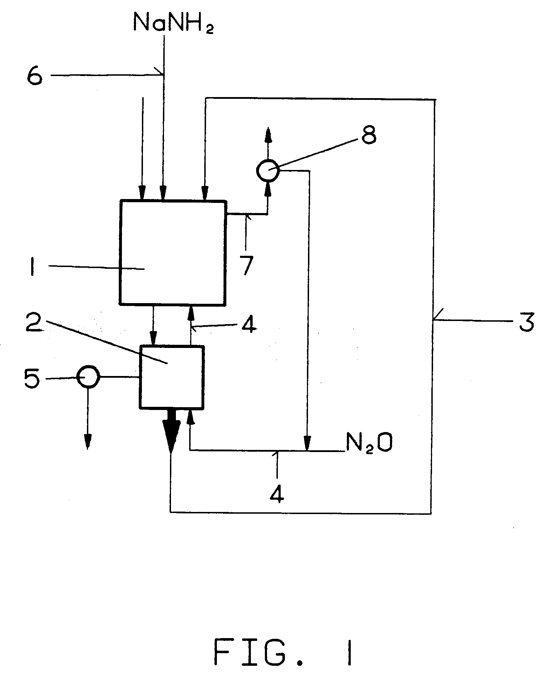

Anhand der Figur 1 wird die Durchführung des erfindungsgemäßen Verfahrens beispielhaft beschrieben.

Der mit Stickstoff inertisierte Röhrenreaktor 1 einer Versuchsanlage wird mit 320 kg Rohazid (NaN₃/NaOH im molaren Verhältnis 1:1) als Trägermaterial gefüllt und der Innenraum des Reaktors 1 sowie die Rückführschnecken 3 auf eine Temperatur von 240°C vorgeheizt. Anschließend werden über Leitung 6 0,3 kg Natriumamid (T=300°C) eindosiert und N₂O über Leitung 4 in einem Mengenstrom von 200 l/min zugegeben. Nachdem die Reaktion begonnen hat - erkennbar an einer Temperaturerhöhung in der Reaktionszone und durch Analyse der Abgase auf Ammoniak - wird kontinuierlich geschmolzenes Natriumamid (0,78 l/min entsprechend etwa 60 kg/h) dem über die Rückführschnecken 3 zurückgeführten Reaktionsgemisch aus Natriumazid und Natriumhydroxid zugegeben und der N₂O-Strom auf einen Wert von 435 l/min, was einem Überschuß von 34 % entspricht, erhöht. Der Reaktor wird nun in der Weise kontinuierlich betrieben, indem aus dem Produktstromteiler 2, der in dem Reaktor 1 integriert ist, über die Schleuse 5 unter vollständiger Umsetzung des Natriumamids kontinuierlich 1,6 kg/min eines Gemisches aus NaOH und NaN₃ abgezogen werden und am Reaktoreinlass über Leitung 7 das überschüssige N₂O sowie 0,2175 kg NH₃/min abgezogen werden; das nichtabgezogene Reaktionsgut wird über die Rückführschnecken 3 in den Reaktor 1 zurückgeführt. In 8 wird das Ammoniak von Distickstoffmonoxid getrennt und letzteres der Leitung 4 zugeführt.

Die Reaktion wird durch ein Unterbrechen der Amidzufuhr abgebrochen und der Reaktor kann nach 30 Minuten Nachreaktionszeit, wobei die N₂O-Gaszufuhr nicht unterbrochen ist, außer Betrieb genommen werden.

Vergleicht man den kontinuierlichen Zusatz von Natriumamid von etwa 60 kg/h entsprechend etwa 480 kg innerhalb von 8 h mit dem Durchsatz nach dem diskontinuierlichen Verfahren gemäß dem Stand der Technik in Höhe von 130 kg innerhalb von 8 h, so wird bereits mit der Versuchsanlage die Leistung um einen Faktor von etwa 3,6 erhöht.

## Patentansprüche

1. Verfahren zur kontinuierlichen Herstellung von Natriumazid durch Umsetzung von Distickstoffmonoxid und Natriumamid, das auf einem Trägermaterial aus Natriumazid und Natriumhydroxid angeordnet ist, bei Temperaturen zwischen 200 und 270°C, **dadurch gekennzeichnet**, daß das feste Reaktionsgut im Kreislauf über einen auf Reaktionstemperatur gehaltenen Mischreaktor (1) mit anschließendem Produktstromteiler (2) und daran anschließender Fördereinrichtung (3) geführt wird und das Distickstoffmonoxid über Leitung (4) im Gegenstrom dazu über den Produktstromteiler (2) und den Mischreaktor (1) geleitet wird, wobei im Produktstromteiler (2) zwischen 5 und 10 Gew% des dort anfallenden Produktgemisches zur Gewinnung des darin enthaltenden Natrimazids über eine Schleuse (5) ausgeschleust werden und die dem ausgeschleustem Gut entsprechende Menge an Natriumamid über Leitung (6) in den Eingangsteil des Mischreaktors (1) eingebracht wird, und wobei das bei der Umsetzung entstehende Ammoniak sowie überschüssiges Distickstoffoxid im Eingangsteil des Mischreaktors über Leitung (7) abgelassen werden.

2. Verfahren gemäß Anspruch 1, **dadurch gekennzeichnet**, daß Produkstromteiler (2) und Fördereinrichtung (3) auf Temperaturen zwischen 100 und 250°C gehalten werden.

3. Verfahren gemäß Anspruch 1 oder 2, **dadurch gekennzeichnet**, daß als Mischreaktor (1) ein Röhrenreaktor eingesetzt ist, in dem das Festgut mit Hilfe von Misch-Förderorganen transportiert wird.

4. Verfahren gemäß einem der Ansprüche 1 bis 3, **dadurch gekennzeichnet,** daß das überschüssige Distickstoffoxid nach Abtrennung des Ammoniaks dem Prozess wieder zugeführt wird.

## Claims

1. Method for the continuous production of sodium azide by reaction of dinitrogen monoxide and sodamide, which is arranged on a carrier material formed of sodium azide and sodium hydroxide, at temperatures between 200 and 270°C, characterised in that the solid reaction material is led in the circulation via a mixing reactor (1) kept at reaction temperature with product flow distributor (2) connected thereto and via conveyor arrangement (3) connected thereto and the dinitrogen monoxide is led via duct (4) in counterflow via the product flow distributor (2) and the mixing reactor (1), with, in the production distributor, between 5 and 10 weight % of the product mixture being deposited therein being discharged via a hose (5) for the recovery of the sodium azide contained therein and the amount of sodamide, corresponding to the product discharged being introduced via duct (6) into the entry part of the mixing reactor (1) and wherein the ammonia being produced in the reaction as well as excess dinitrogen monoxide are removed in the entry part of the mixing reactor via duct (7).

2. Process according to claim 1, characterised in that product flow distributor (2) and conveyor arrangement (3) are kept at temperatures between 100 and 250°C.

3. Process according to claim 1 or 2, characterised in that a tubular reactor in which the solid product is transported with the aid of mixing conveyor devices, is employed as mixing reactor.

4. Process according to one of claims 1 to 3, characterised in that the excess dinitrogen monoxide is resupplied to the process after separation off of the ammonia.

## Revendications

1. Procédé de préparation en continu d'azoture de sodium par réaction de protoxyde d'azote et d'amidure de sodium, lequel est disposé sur un support en azoture de sodium et en hydroxyde de sodium, à des températures situées entre 200°C et 270°C, **caractérisé** en ce que l'on fait circuler le produit solide de réaction dans un réacteur-mélangeur (1) maintenu à la température de réaction et en aval duquel sont montés un diviseur (2) de courant de produit et ensuite un dispositif (3) de transport, et en ce que l'on envoie le protoxyde d'azote, par la canalisation (4) et à contre-courant, dans le diviseur (2) de courant de produit et dans le réacteur-mélangeur (1), alors que l'on soutire du diviseur (2) de courant de produit, par la vanne (5), entre 5 et 10 % en poids du mélange de produit qui s'y trouve, pour récupérer l'azoture de sodium contenu dedans, et que l'on introduit par la canalisation (6), au niveau de la zone d'entrée du réacteur-mélangeur (1), la quantité d'amidure de sodium correspondant au produit soutiré, tout en laissant partir par la canalisation (7) l'ammoniac formé au cours de la réaction ainsi que l'excès de protoxyde d'azote, au niveau de la zone d'entrée du réacteur-mélangeur.

2. Procédé conforme à la revendication 1, **caractérisé** en ce que l'on maintient le diviseur (2) de courant de produit et le dispositif de transport (3) à des températures situées entre 100°C et 250°C.

3. Procédé conforme à la revendication 1 ou 2, **caractérisé** en ce que l'on utilise comme réacteur-mélangeur (1) un réacteur tubulaire dans lequel la matière solide est transportée à l'aide d'organes de transport et de mélange.

4. Procédé conforme à l'une des revendications 1 à 3, **caractérisé** en ce que l'on recycle dans le procédé l'excès de protoxyde d'azote, après l'avoir séparé de l'ammoniac.
